# EUROPEAN PATENT APPLICATION

(11) **EP 3 722 067 A1**
(43) Date of publication of application: **14.10.2020**
(21) Application number: 20164114.9
(22) Date of filing: 19.03.2020
(51) Int. Cl.: B29C 45/27

(54) **MANIFOLD FOR INJECTION MOLDING HOT RUNNER**

(30) Priority: 10.04.2019 JP 2019074833
(71) Applicant: Toyota Boshoku Kabushiki Kaisha, Kariya-shi, Aichi 448-8651 (JP)
(72) Inventor: MIZUNO, Kae, Kariya-shi, Aichi 448-8651 (JP)
(74) Representative: TBK

(57) **Abstract**

A manifold includes a passage through which material flows from an injection device to a mold. The manifold includes an inlet block connected to the injection device, an outlet block, which is separated from the inlet block and connected to the mold, and a first relay block disposed between the inlet block and the outlet block in the extending direction of the passage. The passage is defined to pass through the interior of the inlet block, the first relay block, and the outlet block. The first relay block is configured to be replaceable by a second relay block, which has at least one of a function of changing the extending direction of the passage and a function of dividing the passage into branches.

## Description

### BACKGROUND

### 1. Field

The present disclosure relates to a manifold for an injection molding hot runner.

### 2. Description of Related Art

As disclosed in Japanese Patent No. 6321812, an injection molding hot runner is disposed between an injection device, which delivers molten material, and a mold, which molds a product using the material. The injection molding hot runner includes a manifold that has a passage for delivering the material from the injection device to the mold.

The position of the gate (the position at which material is injected) of a mold varies depending on the product manufactured with material, that is, depending on the mold that molds the product. If the gate position varies depending on the mold, the positional relationship between the material delivery position of the injection device and the gate position of the mold changes. Thus, a dedicated manifold for an injection molding hot runner is used for each mold. That is, a manifold that corresponds to the positional relationship between the gate position of the mold and the delivery position of the injection device is used.

The above-described injection molding hot runner also uses a dedicated manifold for each mold, which molds a product. Thus, each manifold cannot be used in a mold for other products or in a mold that is used to mold the same product but has a different gate position. If a dedicated manifold is prepared for each mold, the manufacturing costs for the manifolds are increased, which inevitably extends the manufacturing time.

### SUMMARY

It is an objective of the present disclosure to provide a versatile manifold for an injection molding hot runner.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

To achieve the foregoing objective, a manifold for an injection molding hot runner is provided that is disposed between an injection device that delivers molten material and a mold that molds a product using the material. The manifold includes a passage through which the material flows from the injection device to the mold. The manifold for an injection molding hot runner includes an inlet block that is connected to the injection device, an outlet block that is separated from the inlet block and is connected to the mold, and a first relay block that is disposed between the inlet block and the outlet block in an extending direction of the passage. The passage is defined to pass through an interior of the inlet block, the first relay block, and the outlet block. The first relay block is configured to be replaceable by a second relay block, which has at least one of a function of changing the extending direction of the passage and a function of dividing the passage into branches.

Other features and aspects will be apparent from the following detailed description, the drawings, and the claims.

### BRIEF DESCRIPTION OF THE DRAWINGS

Fig. 1 is a schematic cross-sectional side view of a manifold for an injection molding hot runner according to an embodiment, illustrating a state in which a first relay block is used.
Fig. 2 is a schematic cross-sectional side view of the manifold, illustrating a state in which the first relay block has been replaced by a second relay block.
Fig. 3 is a cross-sectional view taken along line 3-3 of Fig. 2.
Fig. 4 is a schematic cross-sectional view partially showing a manifold when a second relay block of a modification is used.
Fig. 5 is a plan view partially showing the manifold of Fig. 4.
Fig. 6 is a schematic plan view showing the positional relationship between an inlet block and a first relay block in a modification.
Fig. 7 is a schematic side view of a branch block of a modification.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

A manifold 15 for an injection molding hot runner 11 according to an embodiment will now be described with reference to the drawings.

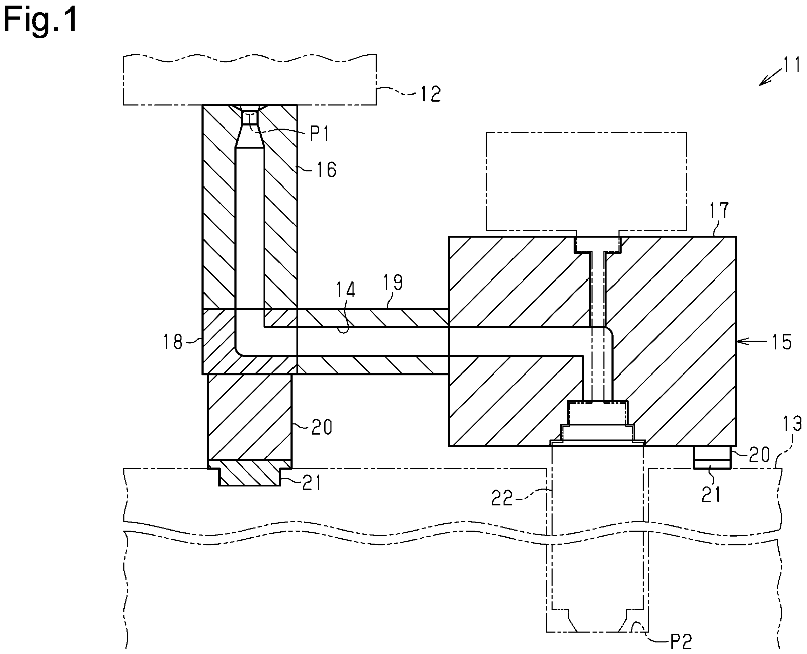

As shown in Fig. 1, the injection molding hot runner 11 is disposed between an injection device 12, which delivers molten material (thermoplastic plastic in the present embodiment), and a mold 13, which molds a product with the material. The injection molding hot runner 11 includes the manifold 15 that has a passage 14 for delivering the material from the injection device 12 to the mold 13.

The manifold 15 is made of steel and includes an inlet block 16, an outlet block 17, a first relay block 18, and a length-changing block 19. The inlet block 16 is connected to the injection device 12 from below. The outlet block 17 is separated from the inlet block 16 and is connected to the mold 13 from above. The first relay block 18 is disposed between the inlet block 16 and the outlet block 17 in the extending direction of the passage 14. The length-changing block 19 is disposed between the first relay block 18 and the outlet block 17.

In the manifold 15, the inlet block 16 and the outlet block 17 are connected to each other via the first relay block 18 and the length-changing block 19. The passage 14 is formed to extend through the interior of the inlet block 16, the first relay block 18, the length-changing block 19, and the outlet block 17. That is, the manifold 15 has a structure in which the upstream end of the first relay block 18 is connected to the downstream end of the inlet block 16, the upstream end of the length-changing block 19 is connected to the downstream end of the first relay block 18, and the upstream end of the outlet block 17 is connected to the downstream end of the length-changing block 19.

In the manifold 15 of the present embodiment, the upper part of the first relay block 18 is detachably connected to the lower end (lower side) of the inlet block 16, a side part of the length-changing block 19 is detachably connected to a side part of the first relay block 18, and a side part of the outlet block 17 is detachably connected to a side part of the length-changing block 19 that is opposite to the first relay block 18.

In this case, thread portions (not shown) are respectively formed at the portion of the inlet block 16 that is connected to the first relay block 18, the portion of the first relay block 18 that is connected to the inlet block 16, the portion of the first relay block 18 that is connected to the length-changing block 19, the portion of the length-changing block 19 that is connected to the first relay block 18, the portion of the length-changing block 19 that is connected to the outlet block 17, and the portion of the outlet block 17 that is connected to the length-changing block 19.

That is, the inlet block 16 and the first relay block 18 are detachably connected to each other by screwing the thread portions (not shown) to each other. The first relay block 18 and the length-changing block 19 are detachably connected to each other by screwing the thread portions (not shown) to each other. The length-changing block 19 and the outlet block 17 are detachably connected to each other by screwing the thread portions (not shown) to each other.

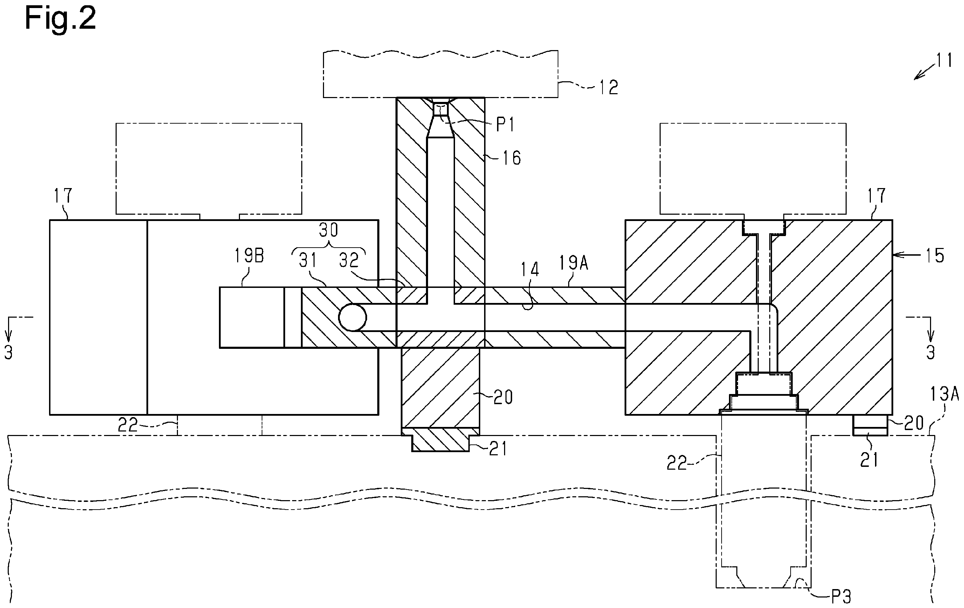

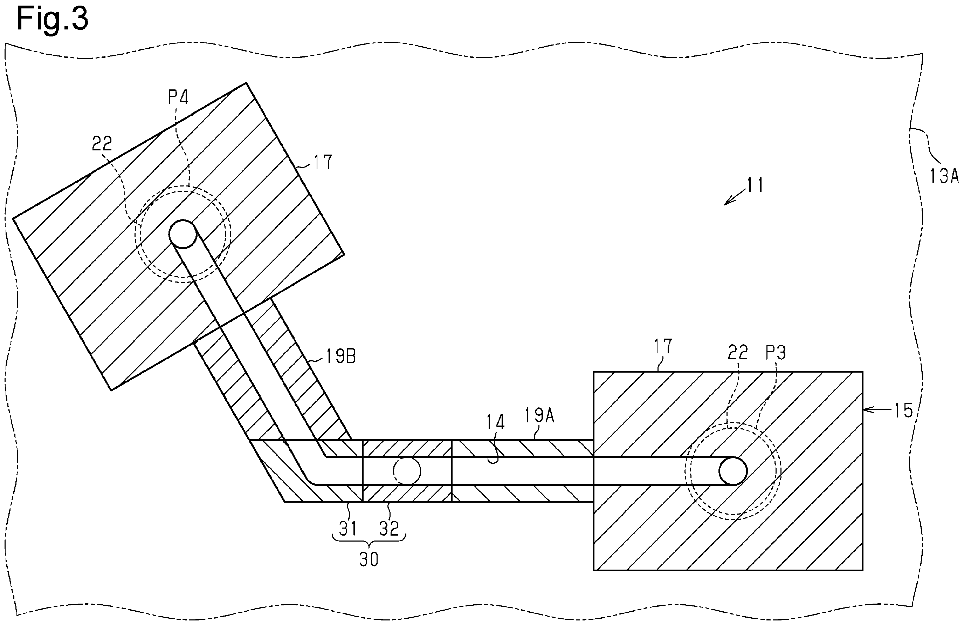

Accordingly, the first relay block 18 and the length-changing block 19 can be easily displaced by other blocks. That is, in the present embodiment, the first relay block 18 can be replaced by a second relay block 30 (refer to Figs. 2 and 3), which will be discussed below. The second relay block 30 has a function of changing the extending direction of the passage 14 and dividing the passage 14 into branches. Also, the length-changing block 19 can be replaced by a length-changing block that has a different passage length.

The passage 14 extends vertically in the inlet block 16, vertically downward and then horizontally in the first relay block 18, horizontally in the length-changing block 19, horizontally and then vertically downward in the outlet block 17. It can be said that the first relay block 18 has a function of changing the extending direction of the passage 14 from a vertically downward direction to a horizontal direction. The manifold 15 (including the second relay block 30 shown in Figs. 2 and 3) is formed by a three-dimensional modeling machine (3D printer) to have a structure in which the passage 14 extends with a constant cross-sectional area.

The inlet block 16, the outlet block 17, the first relay block 18, and the length-changing block 19, which constitute the manifold 15 are configured to be heated by a heater (not shown) to maintain the molten state of the material that passes through the passage 14. The first relay block 18 and the outlet block 17 in the manifold 15 are supported by the mold 13 with support legs 20 in between. The support legs 20 each include a heat insulating member 21 at the portion that contacts the mold 13. The heat insulating member 21 is made of a material (for example, stainless steel) having a thermal conductivity lower than that of the material of which the manifold 15 is made (steel in the present embodiment).

The upper end of the inlet block 16 is connected to a material delivery position P1 of the injection device 12. The delivery position P1 of the injection device 12 and the passage 14 in the inlet block 16 are continuous with each other. Thus, the material delivered from the delivery position P1 of the injection device 12 flows into the passage 14 in the inlet block 16.

A nozzle unit 22 is attached to the outlet block 17. The nozzle unit 22 is configured to inject the material in the passage 14 to a gate position P2 in the mold 13 (the position at which material is injected). The passage 14 in the outlet block 17 is connected to the gate position P2 of the mold 13 via the nozzle unit 22. The nozzle unit 22 is configured to selectively connect and disconnect the passage 14 in the manifold 15 to and from the gate position P2 of the mold 13. Through the connection and disconnection, the nozzle unit 22 injects or stops injecting the material in the passage 14 to the gate position P2 of the mold 13.

The operation in which the manifold 15 is used with a mold 13A, which manufactures a product different from the one manufactured by the mold 13, will now be described.

As shown in Figs. 2 and 3, the mold 13A has two gates respectively located at a gate position P3 and a gate position P4. The horizontal distance from the delivery position P1 of the injection device 12 to the gate position P3 is different from the horizontal distance from the delivery position P1 of the injection device 12 to the gate position P4. Thus, when the above-described manifold 15 is used with the mold 13A, the first relay block 18 (refer to Fig. 1) in the manifold 15 simply needs to be replaced by the second relay block 30. In this case, since the first relay block 18 (refer to Fig. 1) is simply screwed to the inlet block 16 and the length-changing block 19, the first relay block 18 is easily replaced by the second relay block 30.

The configuration will now be described in which the manifold 15 is used with the mold 13A, with the first relay block 18 (refer to Fig. 1) replaced by the second relay block 30.

As shown in Figs. 2 and 3, in the manifold 15 being used with the mold 13A, the second relay block 30 includes a direction-changing block 31, which changes the extending direction of the passage 14, and a branch block 32, which divides the passage 14 into two branches.

The branch block 32 is screwed and connected to the lower part of the inlet block 16. Accordingly, the branch block 32 is arranged between the inlet block 16 and the support leg 20 in the vertical direction. The branch block 32 divides the passage 14, which extends vertically downward from the inlet block 16, into two branches that extend horizontally in directions 180° apart from each other. That is, the passage 14 in the branch block 32 has the shape of a T-junction.

A length-changing block 19A is screwed and connected to one of the two horizontally divided branches of the passage 14 in the branch block 32. The direction-changing block 31 is screwed and connected to the other branch of the passage 14. The length-changing block 19A has a passage length different from that of the length-changing block 19 (refer to Fig. 1). That is, the direction-changing block 31 and the length-changing block 19A are each arranged to be adjacent to the branch block 32 in the horizontal direction. In other words, the branch block 32 is sandwiched by the direction-changing block 31 and the length-changing block 19A in the horizontal direction.

The portion of the length-changing block 19A on the side opposite to the branch block 32 is screwed and connected to the outlet block 17, which is disposed on the gate position P3 of the mold 13A. In this case, the length of the length-changing block 19A is set in advance to be equal to the horizontal distance between the branch block 32 and the outlet block 17, which is disposed on the gate position P3.

The portion of the passage 14 defined in the direction-changing block 31 is formed such that the passage 14, which extends horizontally from the branch block 32, is bent in a horizontal direction by an arbitrary angle (120° in the present embodiment). A length-changing block 19B is screwed to and connected to the downstream portion of the passage 14 in the direction-changing block 31. The length-changing block 19B has a passage length different from that of the length-changing block 19 (refer to Fig. 1). The portion of the length-changing block 19B on the side opposite to the direction-changing block 31 is screwed and connected to the outlet block 17, which is disposed on the gate position P4 of the mold 13A. In this case, the length of the length-changing block 19B is set in advance to be equal to the horizontal distance between the direction-changing block 31 and the outlet block 17, which is disposed on the gate position P4.

As described above, the manifold 15 of the present embodiment allows the first relay block 18 to be replaced by the second relay block 30, the length-changing block 19 to be replaced by another length-changing block 19A, which has a different passage length, and the length-changing block 19B to be added. As such, in addition to the mold 13, the manifold 15 can be used with the mold 13A, which manufactures a product different from that of the mold 13 and has a different number of gates at different positions.

The above-described embodiment achieves the following advantages.
(1) In the manifold 15, the passage 14 is defined to pass through the interior of the inlet block 16, the first relay block 18, and the outlet block 17. The first relay block 18 is configured to be replaceable by the second relay block 30, which has a function of changing the extending direction of the passage 14 and dividing the passage 14 into branches. With this configuration, replacing the first relay block 18 by the second relay block 30 changes the positional relationship between the inlet block 16 and the outlet block 17 in the manifold 15 or changes the number of the outlet blocks 17. Therefore, even if the position of the gate (the position at which material is injected) and the number of the gates are changed in the mold depending on the product to be manufactured, the extending direction of the passage 14 can be changed or the passage 14 can be divided into branches in accordance with such changes in the positional relationship between the gate position of the mold and the delivery position P1 of the injection device 12 and changes in the number of the gates. Therefore, the manifold 15 can be used with a mold for manufacturing different products or a mold for manufacturing the same product but with different positions of the gates. That is, the versatility of the manifold 15 is increased.
(2) The manifold 15 includes the replaceable length-changing block 19, which is capable of changing the length of the passage 14, between the first relay block 18 and the outlet block 17. This configuration allows the length-changing block 19 to be changed to the one with a different passage length so as to free change the length of the manifold 15 in the extending direction of the passage 14, that is, the positional relationship between the inlet block 16 and the outlet block 17 in the extending direction of the passage 14.
(3) In the manifold 15, the first relay block 18 is connected to the lower end of the inlet block 16. Since this configuration extends the passage 14 three-dimensionally, the size of the manifold 15 in the horizontal direction is reduced. Also, the manifold 15 allows the passage 14 to be bent in the vertical direction. Thus, when used with a mold having gates at different heights, the manifold 15 absorbs the height difference between the gates without changing the length of the nozzle unit 22. That is, when used with a mold having gates at different heights, the manifold 15 does not need to use nozzle units 22 having different lengths in correspondence with the distances to the gates at different heights. Therefore, the manifold 15 simply needs to have a single type of nozzle unit 22 even when used with a mold having gates at different heights.
(4) In the manifold 15, the second relay block 30 includes the direction-changing block 31, which changes the extending direction of the passage 14, and the branch block 32, which divides the passage 14 into branches. The direction-changing block 31 and the branch block 32 are disposed to be adjacent to each other. This configuration allows the passage 14 to be divided into branches and change the extending direction at close positions. Accordingly, the injection device 12 and the mold 13 can be connected to each other at a short distance as compared with a case in which the direction-changing block 31 and the branch block 32 are disposed at distant positions.
(5) The passage 14 of the manifold 15 extends with a constant cross-sectional area. Thus, when the passage 14 is bent, the pressure loss of the flow of molten material through the passage 14 is reduced as compared with a case in which the passage 14 does not extend with a constant cross-sectional area.

### Modifications

The above described embodiment may be modified as follows.

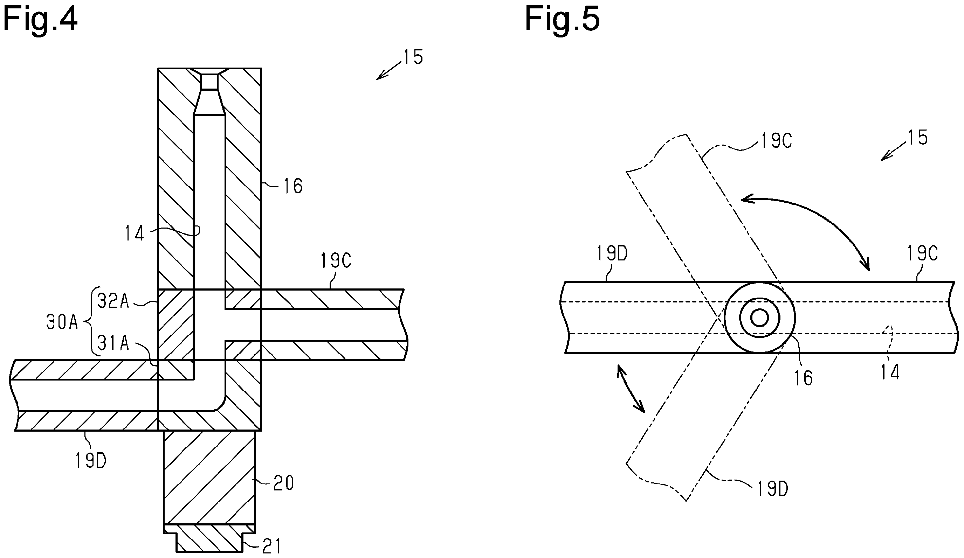

As shown in Fig. 4, the second relay block 30 of the manifold 15 may be replaced by a second relay block 30A. The second relay block 30A is a single component that includes a branch block 32A and a direction-changing block 31A located below the branch block 32A. The branch block 32A and the direction-changing block 31A are integrated to be rotational relative to each other. In this case, the branch block 32A of the second relay block 30A is rotationally connected to the lower end of the inlet block 16, and the lower end of the direction-changing block 31A of the second relay block 30A is supported by the support leg 20 so as not to hinder rotation of the direction-changing block 31A. Further, the branch block 32A and the direction-changing block 31A are rotational about the same central axis extending in the vertical direction. The branch block 32A divides the passage 14, which extends vertically from the inlet block 16, into a branch extending horizontally and a branch extending vertically downward. The direction-changing block 31A bends the passage 14, which extends vertically from the branch block 32A, at a right angle, so as to change the extending direction of the passage 14 to the horizontal direction. A horizontally extending length-changing block 19C is connected to the portion of the branch block 32A on the side of the horizontally extending portion of the passage 14. Another horizontally extending length-changing block 19D is connected to the downstream portion of the passage 14 in the direction-changing block 31A. This configuration allows the directions of the length-changing block 19C and the length-changing block 19D in the horizontal plane to be changed freely by rotating the branch block 32A and the direction-changing block 31A as shown in Figs. 4 and 5. Therefore, in a case in which the outlet blocks 17, the number of which is two, for example, are disposed on the gates of a mold, wherever the outlet blocks 17 are located, the length-changing block 19C and the length-changing block 19D can be easily directed to the respective outlet blocks 17. The length-changing block 19C and the length-changing block 19D are set to have desirable lengths in advance.

The passage 14 does not necessarily need to extend with a constant cross-sectional area.

The second relay block 30 may be constituted by one of the direction-changing block 31 and the branch block 32.

When the second relay block 30 is used in the manifold 15, the direction-changing block 31 and the branch block 32 do not necessarily need to be adjacent to each other.

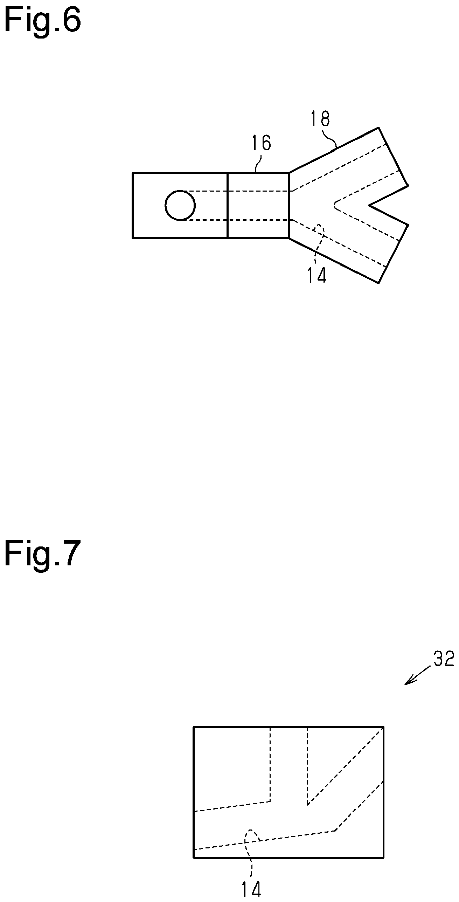

The first relay block 18 does not necessarily need to be arranged below the inlet block 16. For example, as shown in Fig. 6, the inlet block 16 may be bent into an L-shape, and the first relay block 18 may be arranged next to the inlet block 16 in the horizontal direction. In this case, the first relay block 18 may be configured, for example, to divide the passage 14 into two branches.

The length-changing block 19 may be omitted.

The angle by which the passage 14 is bent or the degree by which the passage 14 is curved in the first relay block 18 may be changed.

The angle by which the passage 14 is bent or the degree by which the passage 14 is curved in the direction-changing block 31 may be changed.

The branch block 32 may be configured to divide the passage 14 into three or more branches.

In the branch block 32, the angle formed by the branches of the passage 14 is not limited to 180°, but may be 120°, 90°, or 45°. In this case, the passage 14 in the branch block 32 may be tilted with respect to the horizontal direction as shown in Fig. 7.

The second relay block 30 may be a single component formed by integrating the direction-changing block 31 and the branch block 32. In this case, the number of branches of the passage 14 and the angle by which the passage 14 is bent or the degree by which the passage 14 is curved may be changed.

The connection of the inlet block 16, the outlet block 17, the first relay block 18, the length-changing block 19, and the second relay block 30 does not necessarily need to be achieved by thread portions (not shown), but may be achieved by bolts or clips.

The manifold 15 does not necessarily need to be made of steel, but may be made of a heat-resistant plastic.

In the above-described embodiment, the manifold 15 is located above the mold 13. However, the manifold 15 may be disposed inside the mold 13 to connect the injection device 12 and the gate position to each other. In this case also, the manifold 15 for the injection molding hot runner 11 can be considered to be provided between the injection device 12 and the mold 13.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

A manifold includes a passage through which material flows from an injection device to a mold. The manifold includes an inlet block connected to the injection device, an outlet block, which is separated from the inlet block and connected to the mold, and a first relay block disposed between the inlet block and the outlet block in the extending direction of the passage. The passage is defined to pass through the interior of the inlet block, the first relay block, and the outlet block. The first relay block is configured to be replaceable by a second relay block, which has at least one of a function of changing the extending direction of the passage and a function of dividing the passage into branches.

## Claims

1. A manifold for an injection molding hot runner disposed between an injection device (12) that delivers molten material and a mold (13, 13A) that molds a product using the material, wherein the manifold including a passage (14) through which the material flows from the injection device (12) to the mold (13, 13A), the manifold for an injection molding hot runner being **characterized by**:
an inlet block (16) that is connected to the injection device (12);
an outlet block (17) that is separated from the inlet block (16) and is connected to the mold (13, 13A); and
a first relay block (18) that is disposed between the inlet block (16) and the outlet block (17) in an extending direction of the passage (14), wherein
the passage (14) is defined to pass through an interior of the inlet block (16), the first relay block (18), and the outlet block (17), and
the first relay block (18) is configured to be replaceable by a second relay block (30, 30A), which has at least one of a function of changing the extending direction of the passage (14) and a function of dividing the passage (14) into branches.

2. The manifold for an injection molding hot runner according to claim 1, **characterized in that** a replaceable length-changing block (19, 19A, 19B, 19C, 19D), which is capable of changing a length of the passage (14), is provided between the first relay block (18) and the outlet block (17).

3. The manifold for an injection molding hot runner according to claim 1 or 2, **characterized in that** the first relay block (18) is connected to a lower end of the inlet block (16).

4. The manifold for an injection molding hot runner according to any one of claims 1 to 3, **characterized in that**
the second relay block (30, 30A) includes a direction-changing block (31, 31A) that changes the extending direction of the passage (14) and a branch block (32, 32A) that divides the passage (14) into branches, and
the direction-changing block (31, 31A) and the branch block (32, 32A) are disposed to be adjacent to each other.

5. The manifold for an injection molding hot runner according to any one of claims 1 to 4, **characterized in that** the passage (14) extends with a constant cross-sectional area.
